# NEW EUROPEAN PATENT SPECIFICATION

(11) **EP 0 278 602 B2**
(45) Date of publication and mention of the opposition decision: **09.06.1999**
(45) Mention of the grant of the patent: 24.03.1993
(21) Application number: 88300430.1
(22) Date of filing: 20.01.1988
(51) Int. Cl.: C09C 1/02, D21H 13/00

(54) **Process for the manufacturing of aqueous suspensions of calcium-containing fillers**
Verfahren zur Herstellung von wässrigen Aufschwemmungen von Calcium enthaltenden Füllstoffen
Procédé pour la préparation des suspensions aqueuses des charges contenant du calcium

(30) Priority: 23.01.1987 GB 8701491
(43) Date of publication of application: 17.08.1988
(73) Proprietor: ECC INTERNATIONAL LIMITED, Theale, Reading, Berkshire RG7 4SA (GB)
(72) Inventor: Bown, Richard, St. Austell Cornwall (GB); Pownall, Pamela Gillian, Par Cornwall (GB)
(74) Representative: McCormack, Derek James

(56) References cited:
- EP-A- 0 104 904
- GB-A- 747 842
- GB-A- 1 347 071
- GB-A- 2 031 475
- GB-A- 2 125 838
- US-A- 4 272 297
- DAS PAPIER, vol. 40, no. 11, November 1986, page L56, left-hand column, last paragraph and right-hand column, first paragraph; E.BOBU et al.: "Vorgeflockte Calciumcarbonatfüllstoffe"
- H.-G.Gatterer et al, Wochenblatt für Papierfabrikation, 6, 1984, p.176-178, "Entwicklung einer kationisch eingestellten Streichfarbe - Möglichkeiten und anwendungstechnische Grenzen"
- Polyanion-Polykation-Wechselwirkung u. ihre Bedeutung für die Papier-Industrie, B. Phillip et al, Zellstoff und Papier, pp. 203-206
- Synthese und Polykation-Polyanion-Wechselwirkung von Poly(dimethyl-diallyl-ammoniumchlorid), W.Jaeger et al, Zellstoff und Papier, 6, 1979, pp.268-271

## Description

This invention relates to a process for preparing aqueous suspensions of particulate calcium carbonate fillers such as chalk and marble, to the resultant aqueous suspensions, to paper-making compositions formed from the resultant aqueous suspensions and to process for making such paper-making compositions.

Particles of calcium-containing fillers normally tend to carry a positive charge. For example, pure calcium carbonate in an aqueous suspension open to the atmosphere has a natural pH value of about 8.3. If, however, it is required to form a suspension containing more than about 60% by weight of a calcium-containing filler it is necessary to use a dispersing agent for the filler (see, for example, GB-1204511); and since dispersing agents most commonly used with calcium-containing fillers are negatively charged, this results in the filler bearing an overall negative charge.

For some purposes, it is desirable to form a concentrated aqueous suspension of a particulate calcium-containing filler in which the particles of filler carry a positive charge. For example, when calcium carbonate is to be used as a filler in a paper making composition a cationic retention aid is generally required to bind the particles of calcium carbonate, which carry a negative charge on their surface following treatment with an anionic dispersing agent, to the generally negatively charged cellulosic fibres of the paper pulp. If the calcium carbonate could be provided in the form of a concentrated aqueous suspension of particles carrying a positive charge, the requirement for the cationic retention aid could be reduced or even eliminated.

EP-0104904A relates to compositions comprising an aqueous suspension of mineral particles at high solids content which may be employed in the incorporation of flocculated filler in paper-making stock. The cationic flocculant used in the preparation of the aqueous suspension of mineral particles for use in the formation of a paper-making composition is of relatively high molecular weight.

Das Papier, vol. 40, No. 11, November 1986, page 156; E.Bobu et al. "Vorgeflockte Calciumcarbonatfüllstoffe relates to the flocculation of a calcium carbonate material.

Cationic dispersing agents are known, for example vinyl polymers containing quaternary ammonium groups; and low viscosity suspensions containing high concentrations (for example about 70% by weight) of calcium carbonate treated with such a cationic dispersing agent can be prepared if gentle agitation, for example hand mixing, is used in preparing the resulting suspension. But if more vigorous agitation is used, the viscosity of the suspension is found to be unacceptably high.

It is an object of this invention to provide a concentrated aqueous suspension of a positively charged calcium-containing filler which has low viscosity and which may be prepared using conventional mixing apparatus.

According to a first aspect of the present invention there is provided a process for preparing a paper-making composition comprising an aqueous suspension of a particulate calcium-carbonate filler and cellulosic fibres comprising the step of combining a deflocculated aqueous suspension with an aqueous suspension of cellulosic fibres to form the desired paper making composition, wherein the deflocculated aqueous suspension is made by a process comprising the steps of:
(i) providing a high solids aqueous suspension of a calcium carbonate of the type contaminated on its surface by silica and humic acids, said aqueous suspension comprising at least 60% by dry weight of the calcium carbonate; and
(ii) deflocculating said aqueous suspension with an agent comprising an anionic polyelectrolyte and a cationic polyelectrolyte;
wherein said aqueous suspension is subjected to vigorous agitation sufficient to strip the silica and humic acids from the surface of the natural calcium carbonate and leave the calcium carbonate particles in a state in which they are incapable of being deflocculated in the sole presence of the said cationic polyelectrolyte, and said cationic polyelectrolyte is used in an amount of from 0.01% to 1.5% by weight based on the weight of dry calcium carbonate filler sufficient to render the mineral particles cationic, and wherein the cationic polyelectrolyte is selected from products of copolymerising epichlorohydrin and an aliphatic secondary amine.

According to the present invention in a second aspect there is provided a process for preparing a paper-making composition comprising an aqueous suspension of a particulate calcium-carbonate filler and cellulosic fibres comprising the step of combining a deflocculated aqueous suspension with an aqueous suspension of cellulosic fibres to form the desired paper making composition, wherein the deflocculated aqueous suspension is made by a process comprising the steps of:
(i) providing a high solids aqueous suspension of a particulate calcium carbonate comprising at least 60% dry weight of the calcium carbonate; and
(ii) deflocculating said aqueous suspension with an agent comprising an anionic polyelectrolyte and a cationic polyelectrolyte;
wherein said particulate calcium carbonate is a particulate marble, and said cationic polyelectroyte is used in an amount of from 0.01% to 1.5% by weight based on the weight of dry calcium carbonate filler sufficient to render the mineral particles cationic, and wherein the cationic polyelectrolyte is selected from products of copolymerising epichlorohydrin and an aliphatic secondary amine.

Preferably, the aqueous suspension comprises about 80% dry weight of the filler.

The water soluble substituted polyolefin is the product of co-polymerising epichlorohydrin and an aliphatic secondary amine. The product may have the formula 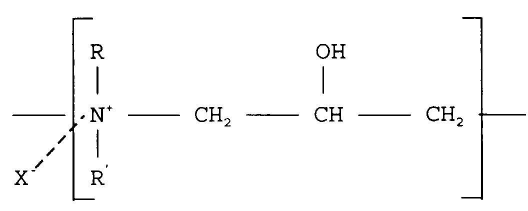 in which R and R', which may be the same or different, are each hydrogen or a lower alkyl group having from one to four carbon atoms, preferably methyl or ethyl and X is Cl⁻, Br⁻, I⁻, HSO₄⁻, CH₃, SO₄⁻ or nitrite.

The anionic polyelectrolyte is preferably a poly(acrylic acid), a poly(methacrylic acid), a partially sulphonated poly(acrylic acid) or poly(methacrylic acid), or an alkali metal or ammonium salt of any of these acids. The number average molecular weight of the anionic polyelectrolyte is preferably in the range of from 500 to 50,000 and the amount used is generally in the range of from 0.01% to 0.2% by weight based on the weight of dry calcium carbonate. An especially effective anionic polyelectrolyte is an alkali metal or ammonium salt of a copolymer of acrylic acid and a sulphonic acid derivative of acrylic acid, in which the proportion of the sulphonic acid derivative monomer is preferably from 5% to 20% of the total number of monomer units.

In preferred embodiments of the first aspect of this invention, the ratio of the weight of cationic polyelectrolyte to the weight of anionic polyelectrolyte used is in the range of from 2:1 to 20:1. It has been found that if the calcium carbonate is a ground natural chalk product the weight ratio of cationic polyelectrolyte to anionic polyelectrolyte is preferably about 15:1 and, if the calcium carbonate is ground marble, the weight ratio is preferably about 5:1.

The size of the particles of the calcium carbonate filler is typically predominantly in the range of from 1 to 10 microns. When the filler contains relatively coarse particles, i.e. particles having a diameter larger than about 10 microns equivalent spherical diameter, of a hard mineral the paper or cardboard product tends to become abrasive with consequent wear of type face and printing machinery. When the filler contains a high proportion of relatively fine particles, i.e. particles having a diameter smaller than about 1 micron equivalent spherical diameter, the strength of the paper or cardboard product is reduced and in addition unless expensive retention aids are used a proportion of the filler which is added to the cellulosic fibres tends not to be retained in the web of fibres but escapes with the "white water", i.e. the water which drains through the web and through the mesh screen, thus introducing the problem of recovering the mineral particles before the effluent water can be discharged.

Preferably, the filler and the dispersing agent are mixed vigorously.

When the filler is very fine, it is important that the anionic polyelectrolyte is added to the filler before the cationic polyelectrolyte. The order of addition is not so important when the particles of filler are coarse.

In the process of the present invention, high speed mixing apparatus may be used without causing any substantial increase in the viscosity of the suspension. Thus, conventional mixing apparatus may be used without any detrimental effect on the properties of the suspension.

The calcium carbonate filler employed in the present invention may be chalk which, in the raw state, is often contaminated on its surface by silica and humic acids so that although pure calcium carbonate has a small natural positive charge, the raw natural calcium carbonate has an overall negative charge on its surface. This raw natural calcium carbonate may be effectively deflocculated using a cationic dispersing agent if only gentle agitation is used, but vigorous agitation strips the silica and humic acids from the surface of the natural calcium carbonate leaving it once more positively charged. Under these conditions a cationic dispersing agent on its own is ineffective in dispersing the particles of calcium carbonate but the addition of a small quantity of an anionic dispersing agent in accordance with the present invention once more makes effective deflocculation possible even under conditions of vigorous agitation. It is believed that the anionic polyelectrolyte dispersing agent, each molecule of which carries a plurality of negative charges, forms electrochemical bonds with the positively charged sites on the surface of the calcium carbonate providing a negatively charged layer to which the cationic polyelectrolyte dispersing agent can bond.

Paper and cardboard are generally made by pouring an aqueous suspension of cellulosic fibres in the form of a pulp on to a wire mesh screen formed from a metal or a synthetic plastics material, and removing the water by drainage and/or other means such as suction, pressing and thermal evaporation. The cellulosic fibres are generally derived from wood which has been mechanically and chemically treated to form a pulp of fibrillated fibres which, when deposited on the wire mesh screen used for forming the paper or cardboard, interlock to form a web. Other sources of cellulosic fibres include sisal, esparto, hemp, jute, straw, bagasse, cotton linters and rags.

The addition of a calcium carbonate filler to the cellulosic fibres improves the opacity, whiteness and ink receptivity of paper or cardboard which is formed from the fibres. The filler is also cheaper than the cellulosic fibres and therefore replacing some of the cellulosic fibres with the filler can result in a cheaper product.

The invention will now be illustrated by the following Example.

### EXAMPLE 1

A first aqueous suspension (A) was prepared containing 70% by weight of a natural chalk having a particle size distribution such that 43% by weight consisted of particles having an equivalent spherical diameter smaller than 2 microns, and, as dispersing agents, a mixture of 0.1% by weight of sodium polyacrylate dispersing agent (C) and 0.7% by weight of a cationic polymer having a number average molecular weight of 70,000 and repeating units represented by the formula:

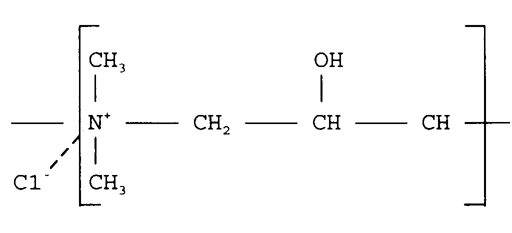

Both percentages were the percentage by weight of dry polymer based on the weight of dry chalk.

A second aqueous suspension (B) was prepared containing 65% by weight of a ground natural marble having a particle size distribution such that 50% by weight consisted of particles having an equivalent spherical diameter smaller than 2 microns and, as dispersing agents, a mixture of 0.01% by weight of the same anionic polymer and 0.2% by weight of the same cationic polymer as were used for suspension A above.

Each suspension was subjected to high intensity mixing by 23,500 revolutions of an impeller rotating at 1,420rpm after which the viscosity of each suspension was measured by means of the Brookfield Viscometer. The results obtained are set forth in Table VI below:

**Table I**

| Suspension | % by wt. of anionic dispersing agent | % by wt. of cationic dispersing agent | Viscosity (mPa.s) |
|---|---|---|---|
| A | 0.1 | 0.7 | 1200 |
| B | 0.01 | 0.2 | 545 |
| | | | |

## Claims

1. A process for preparing a paper-making composition comprising an aqueous suspension of a particulate calcium-carbonate filler and cellulosic fibres comprising the step of combining a deflocculated aqueous suspension with an aqueous suspension of cellulosic fibres to form the desired paper making composition, wherein the deflocculated aqueous suspension is made by a process comprising the steps of:
(i) providing a high solids aqueous suspension of a calcium carbonate of the type contaminated on its surface by silica and humic acids, said aqueous suspension comprising at least 60% by dry weight of the calcium carbonate; and
(ii) deflocculating said aqueous suspension with an agent comprising an anionic polyelectrolyte and a cationic polyelectrolyte;
wherein said aqueous suspension is subjected to vigorous agitation sufficient to strip the silica and humic acids from the surface of the natural calcium carbonate and leave the calcium carbonate particles in a state in which they are incapable of being deflocculated in the sole presence of the said cationic polyelectrolyte, and said cationic polyelectrolyte is used in an amount of from 0.01% to 1.5% by weight based on the weight of dry calcium carbonate filler sufficient to render the mineral particles cationic, and wherein the cationic polyelectrolyte is selected from products of copolymerising epichlorohydrin and an aliphatic secondary amine.

2. A process for preparing a paper-making composition comprising an aqueous suspension of a particulate calcium-carbonate filler and cellulosic fibres comprising the step of combining a deflocculated aqueous suspension with an aqueous suspension of cellulosic fibres to form the desired paper making composition, wherein the deflocculated aqueous suspension is made by a process comprising the steps of:
(i) providing a high solids aqueous suspension of a particulate calcium carbonate comprising at least 60% dry weight of the calcium carbonate; and
(ii) deflocculating said aqueous suspension with an agent comprising an anionic polyelectrolyte and a cationic polyelectrolyte;
wherein said particulate calcium carbonate is a particulate marble, and said cationic polyelectroyte is used in an amount of from 0.01% to 1.5% by weight based on the weight of dry calcium carbonate filler sufficient to render the mineral particles cationic, and wherein the cationic polyelectrolyte is selected from products of copolymerising epichlorohydrin and an aliphatic secondary amine.

3. A process according to any preceding claim, wherein the cationic polyelectrolyte is present in an amount in the range of from 0.01% to 1.5% by weight based on the weight of dry calcium-containing filler.

4. A process according to any preceding claim, wherein the anionic polyelectrolyte is present in an amount of from 0.01% to 0.1% by weight based on the weight of dry calcium-containing filler.

5. A process according to any preceding claim, wherein the ratio of the weight of the cationic polyelectrolyte to the weight of the anionic polyelectrolyte is in the range of from 2:1 to 20:1.

## Patentansprüche

1. Verfahren zur Herstellung einer Zusammensetzung für die Papierfabrikation, beinhaltend eine wässrige Suspension von teilchenförmigen Calciumcarbonatfüllstoff und Cellulosefasern, umfassend den Schritt: Vereinigen einer entflockten wässrigen Suspension mit einer wässrigen Suspension von Cellulosefasern, so dass man die gewünschte Zusammensetzung für die Papierfabrikation erhält, wobei die entflockte wässrige Suspension durch ein Verfahren erhalten wird, umfassend die Schritte:
(i) Bereitstellen einer hochfeststoffhaltigen wässrigen Suspension von Calciumcarbonat des Typs, dessen Oberfläche von Kiesel- und Huminsäuren verunreinigt ist, wobei die Suspension mindestens 60 Gew.% Calciumcarbonat, bezogen auf dessen Trockengewicht, enthält, und
(ii) Entflocken der wässrigen Suspension mit einem Mittel, das einen anionischen und einen kationischen Polyelektrolyten enthält,
wobei die wässrige Suspension so stark bewegt wird, dass die Kiesel- und die Huminsäuren von der Oberfläche des natürlichen Calciumcarbonats abgehen und die Calciumcarbonatteilchen in einer Form zurückbleiben, dass sie nicht mehr durch die alleinige Anwesenheit des kationischen Polyelektrolyten entflockt werden können;
der kationische Polyelektrolyt in einer Menge von 0,01% bis 1,5 Gew.% eingesetzt wird, bezogen auf das Trockengewicht des Calciumcarbonatfüllstoffs, so dass die Mineralteilchen kationisch werden; und
der kationische Polyelektrolyt ausgewählt wird aus den Produkten einer Copolymerisation von Epichlorhydrin und einem aliphatischen sekundären Amin.

2. Verfahren zur Herstellung einer Zusammensetzung für die Papierfabrikation, beinhaltend eine wässrige Suspension von einem teilchenförmigen Calciumcarbonatfüllstoff und Cellulosefasern, umfassend den Schritt: Vereinigen einer entflockten wässrigen Suspension mit einer wässrigen Suspension von Cellulosefasern, wobei die gewünschte entflockte wässerige Suspension erhalten wird durch ein Verfahren, umfassend die Schritte:
(i) Bereitstellen einer hochfeststoffhaltigen wässrigen Suspension von teilchenförmigen Calcium-carbonat, beinhaltend mindestens 60 Gew.% Calciumcarbonat, bezogen auf dessen Trockengewicht; und
(ii) Entflocken der wässrigen Suspension mit einem Mittel, das einen anionischen und einen kationischen Polyelektrolyten enhält;
wobei das teilchenförmige Calciumcarbonat Marmorteilchen sind;
der kationische Polyelektrolyt in einer Menge von 0,01% bis 1,5 Gew.% eingesetzt wird, bezogen auf das Trockengewicht des Calciumcarbonatfüllstoffs, so dass die Mineralteilchen kationisch werden; und
der kationische Polyelektrolyt ausgewählt wird aus Produkten einer Copolymerisation von Epichlorhydrin und einem aliphatischen sekundären Amin.

3. Verfahren nach irgendeinem vorhergehenden Anspruch, wobei der kationische Polyelektrolyt in einer Menge von 0,01 bis 1,5 Gew.% vorliegt, bezogen auf das Trockengewicht des calciumhaltigen Füllstoffs.

4. Verfahren nach irgendeinem vorhergehenden Anspruch, wobei der anionische Polyelektrolyt in einer Menge von 0,01 bis 0,1 Gew.% vorliegt, bezogen auf das Trockengewicht des calciumhaltigen Füllstoffs.

5. Verfahren nach irgendeinem vorhergehenden Anspruch, wobei das Gewichtsverhältnis von kationischem zu anionischem Polyelektrolyten im Bereich von 2 zu 1 bis 20 zu 1 liegt.

## Revendications

1. Procédé de préparation d'une composition pour la fabrication de papier comprenant une suspension aqueuse d'une charge particulaire de carbonate de calcium et de fibres cellulosiques comprenant l'étape consistant à combiner une suspension aqueuse défloculée avec une suspension aqueuse de fibres cellulosiques de façon à former la composition souhaitée pour la fabrication de papier, dans lequel la suspension aqueuse défloculée est préparée par mise en oeuvre d'un procédé comprenant les étapes consistant à :
(i) fournir une suspension aqueuse à forte teneur en matières solides d'un carbonate de calcium contaminé sur surface par de la silice et des acides humiques, ladite suspension aqueuse comprenant au moins 60% en poids sec de carbonate de calcium; et
(ii) défloculer ladite suspension aqueuse avec un agent comprenant un polyélectrolyte anionique et un polyélectrolyte cationique;
ladite suspension aqueuse étant soumise à une agitation vigoureuse suffisante pour entraîner la silice et les acides humiques hors de la surface du carbonate de calcium naturel et pour laisser les particules de carbonate de calcium dans un état où elles sont inaptes à être défloculées en la seule présence dudit polyélectrolyte cationique, et ledit polyélectrolyte cationique étant utilisé en une quantité allant de 0,01% à 1,5% en poids par rapport au poids sec de charge de carbonate de calcium, quantité suffisante pour rendre les particules minérales cationiques, et le polyélectrolyte cationique étant choisi parmi les produits de la copolymérisation de l'épichlorhydrine et d'une amine secondaire aliphatique.

2. Procédé pour la préparation d'une composition pour la fabrication de papier comprenant une suspension aqueuse d'une charge de carbonate de calcium particulaire et de fibres cellulosiques comprenant l'étape consistant à combiner une suspension aqueuse défloculée avec une suspension aqueuse de fibres cellulosiques de façon à former la composition souhaitée pour la fabrication de papier, la suspension aqueuse défloculée étant préparée par mise en oeuvre d'un procédé comprenant les étapes consistant à :
(i) fournir une suspension aqueuse à forte teneur en matières solides d'un carbonate de calcium particulaire comprenant au moins 60% en poids sec de carbonate de calcium; et
(ii) défloculer ladite suspension aqueuse avec un agent comprenant un polyélectrolyte anionique et un polyélectrolyte cationique;
ledit carbonate de calcium particulaire étant du marbre en particules et ledit polyélectrolyte cationique étant utilisé en une quantité allant de 0,01% à 1,5% en poids par rapport au poids sec de charge de carbonate de calcium, quantité suffisante pour rendre les particules minérales cationiques, et le polyélectrolyte cationique étant choisi parmi les produits de la copolymérisation de l'épichlorhydrine et d'une amine secondaire aliphatique.

3. Procédé selon l'une quelconque des revendications précédentes, dans lequel le polyélectrolyte cationique est présent à raison de 0,01% à 1,5% en poids par rapport au poids sec de charge de carbonate de calcium.

4. Procédé selon l'une quelconque des revendications précédentes, dans lequel le polyélectrolyte anionique est présent à raison de 0,01% à 0,1% en poids par rapport au poids sec de charge de carbonate de calcium.

5. Procédé selon l'une quelconque des revendications précédentes, dans lequel le rapport pondéral du polyélectrolyte cationique au polyélectrolyte anionique est comprise entre 2:1 et 20:1.
